# EUROPEAN PATENT SPECIFICATION

(11) **EP 4 084 573 B1**
(45) Date of publication and mention of the grant of the patent: **24.06.2026**
(21) Application number: 20907916.9
(22) Date of filing: 28.09.2020
(51) Int. Cl.: H04W 36/30, H04W 76/19, H04W 76/34, H04W 36/00, H04W 76/12

(54) **NETWORK CONNECTION REESTABLISHMENT METHOD AND DEVICE, STORAGE MEDIUM, AND ELECTRONIC DEVICE**
VERFAHREN UND VORRICHTUNG ZUR WIEDERHERSTELLUNG EINER NETZWERKVERBINDUNG, SPEICHERMEDIUM UND ELEKTRONISCHES GERÄT
PROCÉDÉ ET DISPOSITIF DE RÉTABLISSEMENT DE CONNEXION RÉSEAU, SUPPORT DE STOCKAGE, ET DISPOSITIF ÉLECTRONIQUE

(30) Priority: 25.12.2019 CN 201911358705
(43) Date of publication of application: 02.11.2022
(73) Proprietor: ZTE Corporation, Shenzhen, Guangdong 518057 (CN)
(72) Inventor: YANG, Min, Shenzhen, Guangdong 518057 (CN); LONG, Gang, Shenzhen, Guangdong 518057 (CN)
(74) Representative: Novagraaf Technologies
(86) International application number: PCT/CN2020/118515
(87) International publication number: WO 2021/129018

(56) References cited:
- WO-A1-2018/231136
- WO-A2-2020/076228
- CN-A- 109 479 336
- US-A1- 2018 343 698
- "3rd Generation Partnership Project; Technical Specification Group Radio Access Network; Evolved Universal Terrestrial Radio Access (E-UTRA) and NR; Multi-connectivity; Stage 2 (Release 16)", 19 December 2019 (2019-12-19), XP051841209, Retrieved from the Internet <URL:https://ftp.3gpp.org/tsg_ran/WG2_RL2/Specifications/201912_draft_specs_after_RAN_86/Draft_37340-g00.docx> [retrieved on 20191219]
- ERICSSON: "Correction of references to RRC containers for EN-DC", vol. RAN WG3, no. Sany, P.R. China; 20180416 - 20180420, 7 June 2018 (2018-06-07), XP051511762, Retrieved from the Internet <URL:http://www.3gpp.org/ftp/tsg%5Fran/TSG%5FRAN/TSGR%5F80/Docs/RP%2D181238%2Ezip> [retrieved on 20180607]
- SAMSUNG, NOKIA, NOKIA SHANGHAI BELL, QUALCOMM INCORPORATED: "Discussion on Performing CHO instead of RRE in CHO", 3GPP DRAFT; R2-1913908 DISCUSSION ON PERFORMING CHO INSTAED OF RRE IN CHO, vol. RAN WG2, 4 October 2019 (2019-10-04), Chongqing, China, pages 1 - 4, XP051791891

## Description

### Technical Field

The present invention relates to the field of communications, and in particular, to a method and device for reestablishing a network connection, a storage medium, and an electronic device.

### Background

The dual connectivity technology utilize the radio air interface resources provided by different nodes (in the same mode or in different modes), thereby improving the user experience rate. By means of macro/micro networking, the spectrum efficiency and load balance can be improved, and a UE supporting dual connectivity can be simultaneously connected to two Long-Term Evolution (LTE) / New Radio (NR) nodes, which can increase the throughput of a single user.

In a dual connectivity procedure, due to a downlink air interface fails, a User Equipment (UE) triggers a reestablishment process, and a UE may trigger reestablishment to another node. The current standard protocol only describes releasing the source dual connectivity service during reestablishment, but does not propose recovering the dual connectivity service and how to recover the dual connectivity service during reestablishment. In a dual connectivity scenario, a reestablishment process involves recovery of an SRB1, security re-activation and configuration of a PCell; if a dual connectivity service establishment and recovery are performed after reestablishment succeeds, the service interruption time at the SN side is long, and the UE cannot timely enjoy a high throughput.

Aiming at the described technical problem, no effective solution has been proposed in the related art.

Document "3rd Generation Partnership Project; Technical Specification Group Radio Access Network; Evolved Universal Terrestrial Radio Access(E-UTRA) and NR; Multi-connectivity ; Stage2 (Release 16) " - 3GPP DRAFT 37340-G00, December 2019, document ERICSSON: "Correction of references to RRC containers for EN-DC "; 3GPP DRAFT 36423_CR113441_(REL-15)_R3-182422, vol. RAN WG3, June 2018, and document WO 2020/076228 provide related technical solutions; however, the abovementioned problem still remains unsolved.

### Summary

Embodiments of the present invention provide a method and device for reestablishing a network connection and a storage medium, so as to at least solve the problem of inter-node reestablishment in the related art. The invention is set out in the appended set of claims.

By means of the solution of the embodiments of the present invention, in the case that a reestablishment request sent by a UE is received, a radio link failure indication is sent to a source base station, wherein the reestablishment request is used for requesting to reestablish a network connection with a target base station, and the radio link failure indication is used for indicating that the connection between the UE and the source base station is interrupted; in the case that it is determined that a source base station releases resource information of a SN, receiving UE context information sent by the source base station, wherein the UE context information includes the resource information of the SN; establish a network connection between the UE and the target base station by using UE context information. The reestablishment procedure at the network side is realized, and therefore, the problem of inter-node reestablishment in the related art can be solved, and the effect of realizing inter-node reestablishment can be achieved.

### Brief Description of the Drawings

Drawings, provided for further understanding of the present invention and forming a part of the description, are used to explain the present invention together with exemplary embodiments of the present invention rather than to limit the present invention. In the drawings:
Fig. 1 is a hardware structure block diagram of a UE in a method for reestablishing a network connection;
Fig. 2 is a flowchart (I) of a method for reestablishing a network connection;
Fig. 3 is a flowchart (II) of a method for reestablishing a network connection;
Fig. 4 is a flowchart of a procedure for an inter-MN reestablishment without SN change;
Fig. 5 is a flowchart of a procedure for an inter-MN reestablishment with SN change;
Fig. 6 is a flowchart of an inter-node reestablishment from an MeNB to an eNB;
Fig. 7 is a flowchart of an inter-node reestablishment from an eNB to an MeNB;
Fig. 8 is a structural block diagram (I) of a device for reestablishing a network connection;
Fig. 9 is a structural block diagram (II) of a device for reestablishing a network connection;

### Detailed Description of the Embodiments

Hereinafter, the present invention will be described in detail with reference to the accompanying drawings and embodiments. It is important to note that the embodiments and the characteristics in the embodiments can be combined in a case of no conflicts.

It should be noted that, terms such as "first" and "second" in the description, claims, and accompanying drawings of the present invention are used to distinguish similar objects, but are not necessarily used to describe a specific sequence or order.

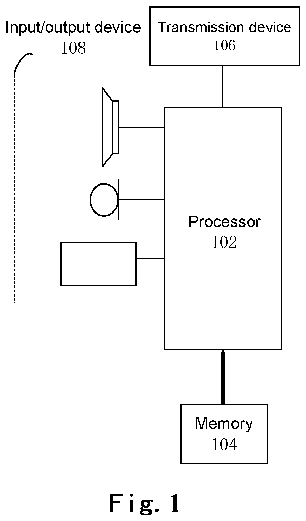

The method embodiment provided in the first embodiment of the present application may be implemented in a UE, a computer terminal, or a similar computing device. Taking the UE as an example, Fig. 1 is a hardware structure block diagram of a UE in a method for reestablishing a network connection according to an embodiment. As shown in Fig. 1, the UE 10 may include one or more (only one is shown in Fig. 1) processors 102 (the processors 102 may include, but are not limited to, processing devices such as a microprocessor MCU or a programmable logic device FPGA) and a memory 104 for storing data. Optionally, the UE can further include a transmission device 106 and an input/output device 108 for a communication function. A person of ordinary skill in the art may understand that the structure shown in Fig. 1 is merely exemplary, which does not limit the structure of the foregoing UE. For example, the UE 10 may also include more or fewer components than shown in Fig. 1, or have a different configuration than that shown in Fig. 1.

The memory 104 may be configured to store a computer program, for example, a software program and a module of application software, such as a computer program corresponding to the method for reestablishing a network connection in the embodiments of the present invention. The processor 102 runs the computer program stored in the memory 104, so as to execute various function applications and data processing, that is, to implement the foregoing method. Memory 104 may include high-speed random access memory, and may also include non-volatile memory, such as one or more magnetic storage devices, flash memory, or other non-volatile solid-state memory. In some instances, the memory 104 may further include memory remotely located from the processor 102, which may be connected to the UE 10 over a network. Examples of such networks include, but are not limited to, the Internet, intranets, local area networks, mobile communication networks, and combinations thereof.

The transmitting device 106 is configured to receive or transmit data via a network. Specific examples of the described network may include a wireless network provided by a communication provider of the UE 10. In an example, the transmitting device 106 may include a Network Interface Controller (NIC) that may be coupled to other network devices via a base station to communicate with the Internet. In an example, the transmitting device 106 can be a Radio Frequency (RF) module for communicating wirelessly with the Internet.

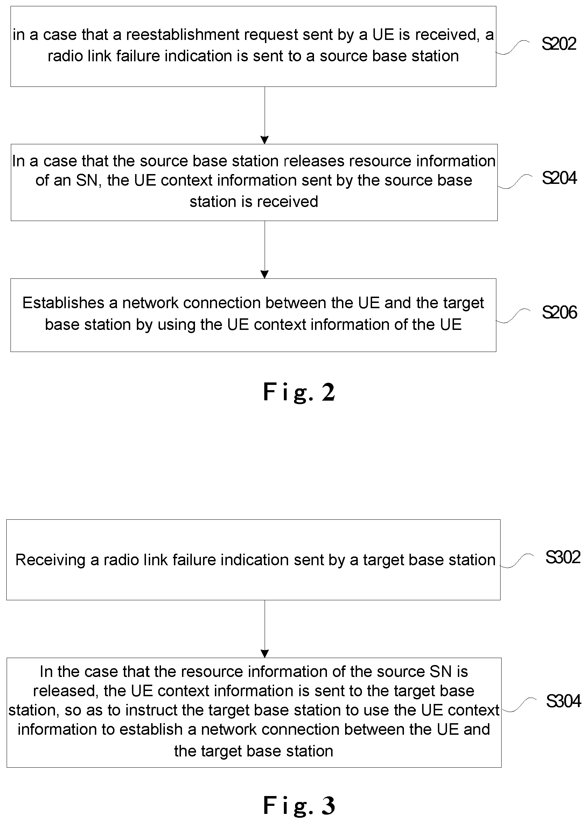

The present claimed embodiment provides a method for reestablishing a network connection. Fig. 2 is a flowchart (I) of a method for reestablishing a network connection according to an embodiment of the present invention. As shown in Fig. 2, the flow includes the following steps:
Step S202, in the case that a reestablishment request sent by a UE is received, sending a radio link failure indication to a source base station, wherein the reestablishment request is used for requesting reestablishing a network connection with a target base station, and the radio link failure indication is used for indicating that the connection between the UE and the source base station is interrupted;
Step S204, in the case that it is determined that a source base station releases resource information of a SN, receiving UE context information sent by the source base station, wherein the UE context information includes the resource information of the SN;
Step S206, the network connection between the UE and the target base station is established based on the UE context information.

By means of the steps, in the case that a reestablishment request sent by a UE is received, a radio link failure indication is sent to a source base station, wherein the reestablishment request is used for requesting to reestablish a network connection with a target base station, and the radio link failure indication is used for indicating that the connection between the UE and the source base station is interrupted; in the case that it is determined that a source base station releases resource information of a SN, receiving UE context information sent by the source base station, wherein the UE context information includes the resource information of the SN; establish a network connection between the UE and the target base station by using UE context information. The reestablishment procedure at a network side is realized, and therefore, the problem of inter-node reestablishment in the related art can be solved, and the effect of realizing an inter-node reestablishment can be achieved.

In an embodiment, an execution subject of the foregoing steps may be, but is not limited to, a base station (for example, a target base station), and the like.

This embodiment includes but is not limited to being applied in a communication scenario. For example, in a dual connectivity networking scenario, when a user establishes a inter-node reestablishment, the connection needs to be restored and service continuity needs to be maintained. The dual connectivity in this embodiment includes, but are not limited to, EN-DC, NE-DC, NGEN-DC, NR-DC.

In an embodiment, in a dual connectivity networking scenario, communication may fail anytime due to the particularity of the wireless air interface. A UE needs to be reestablished Inter-node to a target base station, and the target base station requests, via a Physical Cell Identity (PCI) carried by the UE, a base station at a source side to acquire UE context information.

In the present embodiments, by acquiring UE context information, a network connection between the UE and a target base station can be established by using the UE context information.

In an embodiment, in the case of receiving a reestablishment request sent by a UE, sending a radio link failure indication to a source base station includes:
S1, obtaining source base station information from a PCI that the UE accesses;
S2, sending a radio link failure indication to the source base station according to the information of the source base station, so as to instruct the source base station to release a SN connected to the UE.

In an embodiment, establishing the network connection between the UE and the target base station based on the UE context information may include:
S1, determining a source SN according to context information of an SN in UE context information and a configuration of a target base station, wherein the source SN is connected to the UE;
S2, sending a dual connectivity establishment request to a source SN;
S3, adding the source SN to the target base station according to the bearer of the target base station, so as to establish a network connection between the UE and the target base station.

Alternatively, in this embodiment, in a process of adding an SN at a target base station side, in a process of obtaining a UE context at a target side, a handover request of a source side is received, and UE context information (including context information of an SN) is carried; a target side base station adds an SN according to the context information and a configuration of the target base station; a target base station T-MN and a data forwarding address information of a source SN are carried to the source MN via an acknowledgement ACK message; and the source MN can ensure that a data service is directly forwarded to a corresponding target side (T-MN/S-SN) according to a bearer type (MCG, SCG).

In an embodiment, adding the source SN to the target base station according to the bearer of the target base station, so as to establish a network connection between the UE and the target base station includes one of the following:
S1, in the case that a bearer of a target base station and a bearer of a source base station are established on a source SN, adding the source SN to the target base station so as to establish a network connection between a UE and the target base station;
Alternatively, in this embodiment, the bearer at the base station may be partially established at the source SN and partially established at the target MN.

S2, receiving a data forwarding address information sent by a source SN; sending the data forwarding address information of the source SN and the data forwarding address information of the target base station to the source base station, so as to instruct the source base station to respectively send data in the source base station to the target base station and the source SN according to the data forwarding address information of the target base station and the data forwarding address information of the source SN; and adding the source SN to the target base station according to data in the source base station, so as to establish a network connection between the UE and the target base station.

In an embodiment, after the network connection is established between the UE and the target base station, the method may further include that:
S1, reestablishing a connection between the target base station and a signaling radio bearer (SRB), restoring security of a serving cell (PCell), and establishing a connection between the target base station and a data radio bearer (DRB).

In an optional embodiment, establishing a network connection between a UE and a target base station by using UE context information includes:
S1, in the case that data sent by a source base station and a source SN are received according to UE context information, reestablishing a connection between a target base station and a SRB, restoring security of a serving cell (PCell), and establishing a connection between the target base station and a DRB;
S2, sending a dual connectivity establishment request to a target SN;
S3, receiving a response message sent by a target SN and used for responding to a dual connectivity establishment request, wherein the response message includes the data forwarding address information;
S4, sending data of the source base station to the target SN based on the data forwarding information, so as to add the target SN to the target base station, and establish a network connection between the UE and the target base station.

Optionally, in this embodiment, the SN is added in the reestablishment process. In other words, in the process of obtaining the UE context at the target side, the target side receives a handover request from the source side, and carries the UE context information (including the context of the SN); the target side carries the data forwarding address information of the T-MN and sends to the source MN via an ACK message; and the source MN directly forwards the data service (MCG, SCG) to the corresponding T-MN. After the SRB1 is successfully established and the DRB is established, the SN is added, and the data on the T-MN is forwarded to the T-SN.

The present embodiment provides a method for reestablishing a network connection. Fig. 3 is a flowchart (II) of a method for reestablishing a network connection according to an embodiment embodiment. As shown in Fig. 3, the flow includes the following steps:
Step S302, receiving a radio link failure indication sent by a target base station, wherein the radio link failure indication is used for representing that a connection between a UE and a source base station is interrupted;
Step S304, in the case that the resource information of the source SN is released, sending UE context information to the target base station, so as to instruct the target base station to use the UE context information to establish a network connection between the UE and the target base station, wherein the UE context information includes the resource information of the source SN.

By means of the above steps, a radio link failure indication sent by a target base station is received, wherein the radio link failure indication is used for representing that a connection between a UE and a source base station is interrupted; in the case of releasing resource information of a source SN, sending UE context information to a target base station, so as to instruct the target base station to establish a network connection between the UE and the target base station by using the UE context information, wherein the UE context information includes the resource information of the source SN. The reestablishment procedure at a network side is realized, and therefore, the problem of inter-node reestablishment in the related art can be solved, and the effect of realizing an inter-node reestablishment can be achieved.

In an embodiment, an execution subject of the foregoing steps may be a base station (for example, a source base station), but is not limited thereto.

Alternatively, releasing the resource information of the source SN includes:
S1, receiving a handover request acknowledge message sent by the target base station, wherein the handover request acknowledge message includes a data forwarding address information of the target base station;
S2, establishing a data forwarding channel based on the data forwarding address information of the described target base station;
S3, sending the data from the source base station to an SN establishing a dual connectivity with the target base station and the target base station by using the data forwarding channel;
S4, receiving a release indication sent by the described UE;
S5, sending the described release indication to the described SN, so as to instruct the described SN to release the resource information of the described SN.

In an embodiment, in this embodiment, the target SN may be a source SN or another SN.

Alternatively, in the present embodiment, after receiving handover request acknowledge message from the target MN, the source MN send SN release request message to the source SN by X2/Xn interface, and the source SN startup data forwarding to the target MN or/and the target SN. The source MN receives the UE context release message by the target MN, send UE context release message to the source SN.

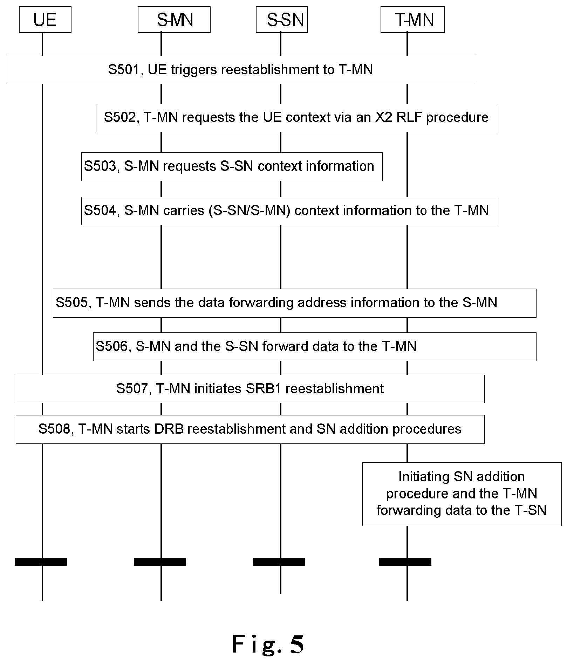

Alternatively, for example, the target base station selects a new SN at the stage of reestablishing the DRB, and adds the SN, and as shown in Fig. 5, the method includes the following steps:
S501: the UE triggers reestablishment to the T-MN;
S502: the T-MN requests the UE context information of the S-MN and the S-SN via an X2 RLF;
S503: the S-MN requests the context information of the S-SN;
S504: the S-MN transfers the acquired S-MN and S-SN context information to the target MN;
S505: the T-MN sends data forwarding address information of the T-MN to the S-MN;
S506: the S-MN initiates a data forwarding from the S-MN/S-SN to the T-MN;
S507: the target MN completes the SRB1 reestablishment process; and
S508: the target MN completes the DRB reestablishment process and the SN addition process and restores the service.

The target MN adds an SN according to the source SN information and the target side configuration, and selects a new SN to be available on the condition for the target MN selecting SN is satisfied;

The target MN sends SN addition request message to the new SN. If data forwarding is required, the target SN brings the data forwarding address information to the target MN, which forwards the data to the target SN.

In conclusion, in the process of inter-node reestablishment of a dual connectivity scenario in the present embodiment, a mechanism for quickly restoring a dual connectivity service in the reestablishment process is proposed, so as to ensure the continuity of a user in the process of inter-node movement in a dual connectivity scenario, reduce packet loss, and improve the user experience.

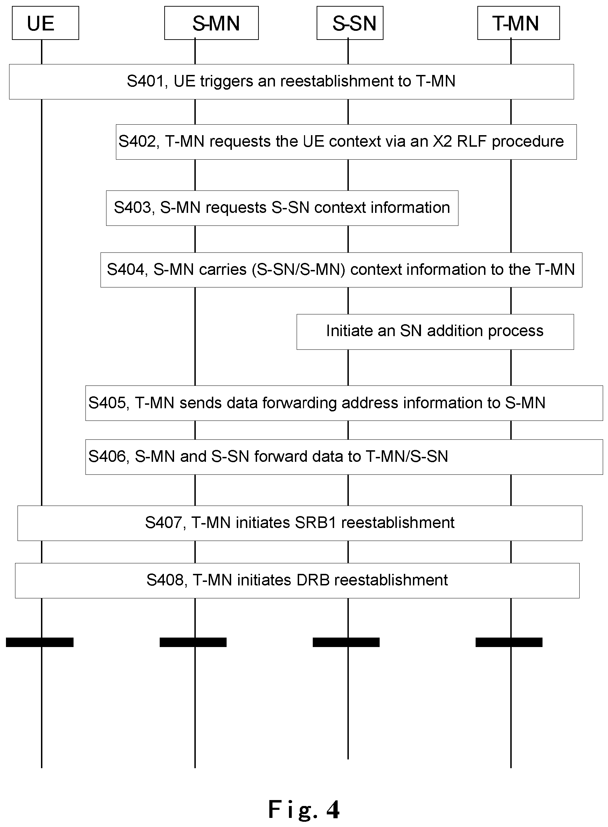

The present application will be described below in conjunction with specific embodiments:
The present embodiment provides a processing method for inter-node reestablishment under a dual connectivity scenario. In the following, taking an example that a UE accesses a source MN and has added a Secondary Node (SN), inter-node reestablishment to a target Master Node (MN) occurs, During the target MN requests to obtain the UE context, and the target MN choice the source SN as SN, trigger SN addition procedure to this SN, as shown in Fig. 4, the method includes the following steps:
S401: the UE triggers reestablishment to the target MN;
S402: the target MN acquires UE context information of the source MN and the source SN via an X2 RLF request;
S403: the source MN transmits the acquired UE context information of the S-MN and S-SN to the target MN;
S404: the target MN trigger SN addition procedure according to the source SN information and the target side configuration. Selecting a source SN to be available on the condition that a target MN selection SN is satisfied;
S405: the target MN sends an addition dual connectivity request to the source SN. If data forwarding is required, the source SN brings the data forwarding address information to the target MN;
S406: the target MN brings data forwarding information of the target MN and the source SN to the source MN; the source MN initiates data forwarding from the S-MN/S-SN to the T-MN/S-SN. If the bearers are established on the SN at both the source side and the target side, the corresponding bearers do not trigger data forwarding;
S407: the target MN completes the SRB1 reestablishment flow; and
S408: the target MN completes the DRB reestablishment flow and restores the service.

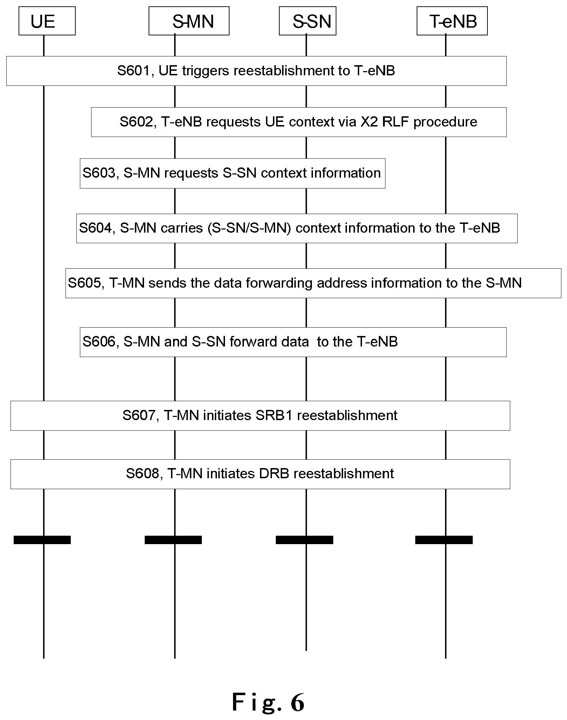

In the following, taking an example that a UE accesses at a source MN and has added an SN, and an inter-node reestablishment occurs to a target eNB, as shown in Fig. 6, the following steps are included:
S601: the UE triggers a reestablishment request to the T-eNB;
S602: the T-eNB requests UE context information of the S-MN and the S-SN via an X2 RLF;
S603: the S-MN requests context information of the S-SN;
S604: the S-MN transfers the acquired UE context information of the S-MN and S-SN to the T-eNB;
S605: the T-eNB sends the data forwarding address information of the T-eNB to the S-MN;
S606: the S-MN initiates a data forwarding from the S-MN/S-SN to the T-eNB;
S607: the target eNB completes the SRB1 reestablishment flow;
S608: the target eNB completes the DRB reestablishment flow and restores the service.

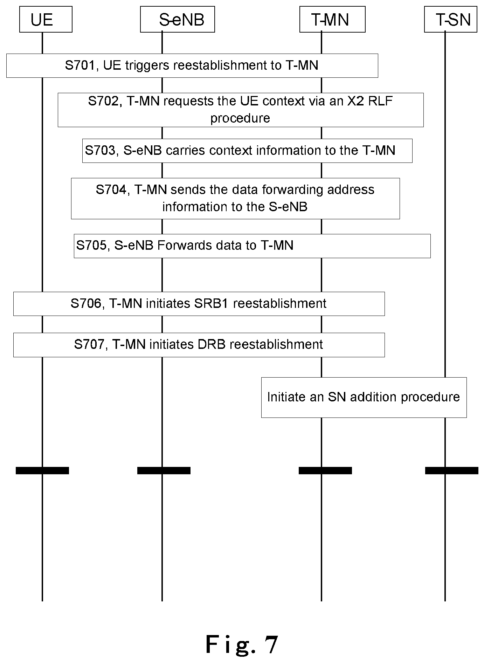

As shown in Fig. 7, an example in which a UE accesses from a source eNB, an inter-node reestablishment to a target MN occurs, and the target MN adds an SN in a process of reestablishing a DRB, includes the following steps:
S701: the UE triggers a reestablishment request to the target MN;
S702: the target MN initiates a request for UE context information via an X2 RLF message;
S703: the S-eNB carries the UE context information to the T-MN;
S704: the T-MN sends the data forwarding address information to the S-eNB;
S705: the S-eNB initiates data forwarding, and forwards the data to the T-MN;
S706: the target MN completes the SRB1 reestablishment flow;
S707: the target MN completes the DRB reestablishment process and the SN addition process, and restores the service.

The target MN adds an SN according to the configuration of the target node, and selects a new SN to be available on the condition for the target MN selecting SN is satisfied;
The target MN sends an SN addition procedure message to the new SN.

Through the description of the foregoing embodiments, a person skilled in the art may clearly understand that the method according to the foregoing embodiments may be implemented by software in addition to a necessary universal hardware platform, and definitely may also be implemented by hardware. However, in many cases, the former is a preferred implementation.

Based on such understanding, the technical solutions of the present embodiments essentially or the part contributing to the prior art may be embodied in the form of a software product. The computer software product is stored in a storage medium (such as a ROM/RAM, a magnetic disk, or an optical disk), and includes several instructions for instructing a terminal device (which may be a mobile phone, a computer, a server, or a network device) to execute the foregoing methods of the described embodiments.

A device for reestablishing a network connection is also provided in the present embodiment. The device is configured to implement the described embodiments and preferred implementations, and what has been described will not be elaborated. The term "module", as used hereinafter, is a combination of software and/or hardware capable of realizing a predetermined function. Although the device described in the following embodiment is preferably implemented by software, implementation of hardware or a combination of software and hardware is also possible and conceived.

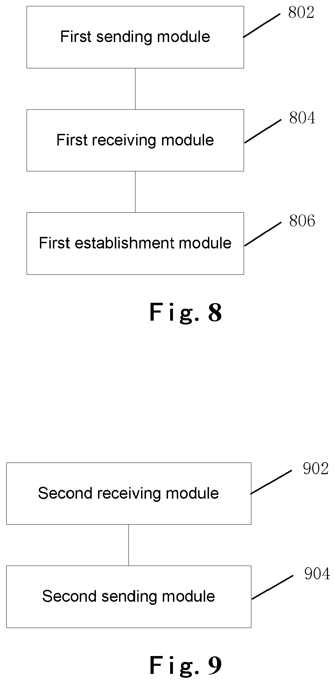

Fig. 8 is a structural block diagram (I) of a device for reestablishing a network connection according to an embodiment. As shown in Fig. 8, the device includes: a first sending module 802, a first receiving module 804 and a first establishing module 806. The device is described below:
a first sending module 802, configured to send a radio link failure indication to a source base station in the case of receiving a reestablishment request sent by a UE, wherein the reestablishment request is used for requesting reestablishing a network connection with a target base station, and the radio link failure indication is used for indicating that the connection between the UE and the source base station is interrupted;
a first receiving module 804, configured to, in the case that it is determined that the source base station releases resource information of a SN, receive UE context information sent by the source base station, wherein the UE context information includes the resource information of the SN; and
a first establishment component 806, configured to establish a network connection between the UE and the target base station by using UE context information.

In an embodiment, the first sending module 802 includes:
a first determination unit, which is configured to determine the source MN information from the physical cell identity that the UE accesses; and
a first sending element configured to send the radio link failure indication to the source base station according to the information of the source base station, so as to instruct the source base station to release a SN connected with the UE.

In an embodiment, the first establishing module 806 includes:
a second determination unit, which is configured to determine a source SN according to an SN UE context information and configuration of the target base station, wherein the source SN is connected to the UE;
a second sending element configured to send a dual connectivity establishment request to the source SN; and
a first establishment unit, configured to add the source SN to the target base station according to a bearer of the target base station, so as to establish a network connection between the UE and the target base station.

In an embodiment, the first establishment module 806 includes one of the following:
a second establishment component configured to add the source SN to the target base station to establish a network connection between the UE and the target base station in a case that the bearer of the target base station and the bearer of the source base station are established on the source SN; and
a third establishment unit, configured to receive a data forwarding address information sent by the source SN; sending the data forwarding address information of the source SN and the data forwarding address information of the target base station to the source base station, so as to instruct the source base station to respectively send data in the source base station to the target base station and the source SN according to the data forwarding address information of the target base station and the data forwarding address information of the source SN; and adding the source SN to the target base station according to data in the source base station, so as to establish a network connection between the UE and the target base station.

In an embodiment, the device further includes: a first processing module, configured to reestablish a connection between the target base station and the signaling radio bearer (SRB), restore the security of a serving cell (PCell) and establish a connection between the target base station and a DRB after establishing a network connection between the UE and the target base station.

In an embodiment, the first establishing module 806 includes:
a fourth establishment unit, which is configured to, in the case that data sent by the source base station and the source SN is received according to UE context information, reestablish a connection between the target base station and the SRB, restore the security of a serving cell (PCell), and establish a connection between the target base station and a DRB;
a third sending element configured to send a dual connectivity establishment request to a target SN;
a first receiving unit, configured to receive a response message sent by the target SN in response to the dual connectivity establishment request, wherein the response message includes the data forwarding address information; and
a fifth establishment unit, configured to send the data of the source base station to the target SN based on the data forwarding information, so as to add the target SN to the target base station to establish a network connection between the UE and the target base station.

According to another embodiment, a device for reestablishing a network connection is provided, which includes:
a second receiving module, configured to receive a radio link failure indication sent by a target base station, wherein the radio link failure indication is used for representing that a connection between the UE and a source base station is interrupted; and
a second sending module, configured to, in the case that resource information of a source SN is released, send UE context information to a target base station, so as to instruct the target base station to use the UE context information to establish a network connection between the UE and the target base station, wherein the UE context information include the resource information of the source SN.

Alternatively, the second sending module includes:
a second receiving unit, configured to receive a handover request acknowledge message sent by the target base station, wherein the handover request acknowledge message includes a data forwarding address information of the target base station;
a sixth establishment unit, configured to establish a data forwarding channel based on data forwarding address information of the target base station;
a fourth sending element configured to use the data forwarding channel to send the data in the source base station to the SN and the target base station which establish the dual connectivity with the target base station;
a third receiving element, which is configured to receive the release indication sent by the UE; and
a fifth sending element, configured to send the release indication to the SN to indicate the SN to release the resource information of the SN.

Fig. 9 is a structural block diagram (II) of a device for reestablishing a network connection according to an embodiment. As shown in Fig. 9, the device includes a second receiving module 902 and a second sending module 904. The device is described below.

A second receiving module 902, configured to receive a radio link failure indication sent by a target base station, wherein the radio link failure indication is used for indicating that a connection between the UE and a source base station is interrupted.

A second sending module 904, configured to, in the case that resource information of a source SN is released, send UE context information to a target base station, so as to instruct the target base station to use the UE context information to establish a network connection between the UE and the target base station, wherein the UE context information include the resource information of the source SN.

In an embodiment, the second sending module 904 includes: a second receiving unit configured to receive a handover request acknowledge message sent by the target base station, wherein the handover request acknowledge message includes a data forwarding address information of the target base station; a sixth establishment unit, configured to establish a data forwarding channel based on a data forwarding address information of the target base station; a fourth sending element configured to send the data in the source base station to the source SN and the target base station through the data forwarding channel; a third receiving element, which is configured to receive the release indication sent by the UE; and a fifth sending element, configured to send the release indication to the SN to indicate the SN to release the resource information of the SN.

It should be noted that each module may be implemented by software or hardware. The latter may be implemented in the following manner, but is not limited thereto. All the modules are located in a same processor; alternatively, the modules are located in different processors in an arbitrary combination.

Embodiments of the present invention further provide a storage medium. The storage medium stores a computer program. The computer program is configured to execute the steps in any one of the method embodiments when running.

Alternatively, in this embodiment, the storage medium may be configured to store a computer program for executing each of the above steps.

In an embodiment, the storage medium may include, but is not limited to, any medium that can store a computer program, such as a USB flash drive, a Read-Only Memory (ROM), a Random Access Memory (RAM), a removable hard disk, a magnetic disk, or an optical disc.

Embodiments further provide an electronic device, comprising a memory and a processor. The memory stores a computer program. The processor is configured to run the computer program to execute steps in any one of the method embodiments.

In an embodiment, the electronic device can further include a transmission device and an input/output device, wherein the transmission device is connected to the processor, and the input/output device is connected to the processor.

Alternatively, in this embodiment, the processor may be arranged to perform the above steps by a computer program.

Alternatively, for specific examples in this embodiment, reference may be made to the examples described in the foregoing embodiments and optional implementations, and details are not repeatedly described herein in this embodiment.

Obviously, those skilled in the art should understand that each module or each step of the present invention may be implemented by a universal computing device, and the modules or steps may be concentrated on a single computing device or distributed on a network formed by a plurality of computing devices. Alternatively, the modules or steps may be implemented by program codes executable for the computing devices, so that the modules or steps may be stored in a storage device for execution with the computing devices, the shown or described steps may be executed in sequences different from those described here in some cases, or the modules or steps may be made into integrated circuit modules respectively, or multiple modules or steps therein may be made into a single integrated circuit module for implementation. As such, the present invention is not limited to any particular hardware and software combination.

## Claims

1. A method for reestablishing a network connection, performed by a target master node, MN, comprising:
in a case that a reestablishment request sent by a user equipment, UE, is received, sending (S202) a radio link failure indication to a source MN, wherein the reestablishment request is used for requesting to reestablish a network connection with the target MN, and the radio link failure indication is used for indicating that the connection between the UE and the source MN is interrupted;
in a case that the source MN releases resource information of a source secondary node, SN, receiving (S204) UE context information sent by the source MN, wherein the UE context information comprises the resource information of the source SN; and
establishing (S206) a network connection between the UE and the target MN and a target SN by using UE context information.

2. The method according to claim 1, wherein in the case that a reestablishment request sent by a UE is received, sending a radio link failure indication to a source MN comprises:
determining source MN information from a physical cell identity (PCI) that the UE accesses; and
sending the radio link failure indication to the source MN according to the information of the source MN, so as to instruct the source MN to release the source SN connected to the UE.

3. The method of claim 1, wherein reestablishing a network connection between the UE and the target MN and the target SN using UE context information comprises:
determining the source SN as the target SN according to the context information of the SN in the UE context information and the configuration of the target MN, wherein the source SN is connected to the UE;
sending a dual connectivity establishment request to the source SN; and
adding the source SN to the target MN according to the bearer of the target MN, so as to establish a network connection between the UE and the target MN and the source SN.

4. The method according to claim 3, wherein adding the source SN to the target MN according to the bearer of the target MN, so as to establish a network connection between the UE and the target MN and the source SN comprises one of the following:
in a case that a bearer of the target MN and a bearer of the source MN are established on the source SN, adding the source SN to the target MN, so as to establish a network connection between the UE and the target MN and the source SN; and
receiving a data forwarding address information sent by the source SN; sending the data forwarding address information of the source SN and a data forwarding address information of the target MN to the source MN, so as to instruct the source MN and the source SN respectively send data to the target MN and the source SN according to the data forwarding address information of the target MN and the data forwarding address information of the source SN; adding the source SN to the target MN according to data in the source MN, so as to establish a network connection between the UE and the target MN and the source SN.

5. The method according to claim 3, wherein after establishing the network connection between the UE and the target MN and the source SN, the method further comprises:
reestablishing a signaling radio bearer (SRB) connection with the target MN, restoring security of a serving cell (PCell), and establishing a data radio bearer (DRB) connection between the target MN and the source SN.

6. The method of claim 1, wherein establishing a network connection between the UE and the target MN and the target SN using UE context information comprises:
in a case that data sent by the source MN and the source SN are received according to UE context information, reestablishing a signaling radio bearer (SRB) connection with the target MN, restoring security of a serving cell (PCell), and establishing a data radio bearer (DRB) connection between the target MN and the source SN;
sending a dual connectivity establishment request to a target SN;
receiving a response message sent by the target SN in response to the dual connectivity establishment request, wherein the response message comprises the data forwarding address information; and
based on the data forwarding information, sending data of the source MN and the source SN to the target MN and the target SN, so as to add the target SN to the target MN, and establish a network connection between the UE and the target MN and the target SN.

7. A method for reestablishing a network connection, performed by a source master node, MN, comprising:
receiving (S302) a radio link failure indication sent by a target master node, MN, wherein the radio link failure indication indicates that a connection between a UE and the source MN is interrupted; and
in the case that resource information of a source secondary node, SN, is released, sending (S304) UE context information to the target MN, so as to instruct the target MN to establish a network connection between the UE and the target MN and a target SN by using the UE context information, wherein the UE context information comprises the resource information of the source SN.

8. The method according to claim 1, wherein releasing resource information of a source SN comprises:
receiving a handover request acknowledge message sent by the target MN, wherein the handover request acknowledge message comprises a data forwarding address information of the target MN;
establishing a data forwarding channel based on a data forwarding address information of the target MN;
sending the data from the source MN and the source SN to the target MN and the target SN by using the data forwarding channel;
receiving the release indication sent by the target MN; and
sending the release indication to the source SN to instruct the source SN to release resource information of the source SN.

9. A device for reestablishing a network connection, comprising:
a first sending module (802), configured to, in a case that a reestablishment request sent by a user equipment, UE, is received, send a radio link failure indication to a source master node, MN, wherein the reestablishment request is used for requesting to reestablish a network connection with a target MN, and the radio link failure indication is used for indicating that the connection between the UE and the source MN is interrupted;
a first receiving module (804), configured to, in a case that it is determined that the source MN releases resource information of a source secondary node, SN, receive UE context information sent by the source MN, wherein the UE context information comprises resource information of the source SN; and
a first establishment module (806), configured to establish a network connection between the UE and a target MN and the target SN by using UE context information.

10. A device for reestablishing a network connection, comprising:
a second receiving module (902), configured to receive a radio link failure indication sent by a target MN, wherein the radio link failure indication indicates that a connection between a UE and a source MN is interrupted;
a second sending module (904), configured to, in a case that resource information of a source secondary node, SN, is released, send UE context information to a target MN, so as to instruct the target MN to establish a network connection between the UE and the target MN and a target SN by using the UE context information, wherein the UE context information comprises the resource information of the source SN.

11. A storage medium, wherein the storage medium stores a computer program, wherein the computer program is configured to run to execute the method as claimed in any one of claims 1 to 8.

## Patentansprüche

1. Verfahren zur Wiederherstellung einer Netzwerkverbindung, durchgeführt von einem Ziel-Master-Knoten, MN, umfassend:
in einem Fall, dass eine von einer Benutzerausrüstung, UE, gesendete Wiederherstellungsanfrage empfangen wird, Senden (S202) einer Funkverbindungsausfallanzeige an einen Quell-MN, wobei die Wiederherstellungsanfrage zum Anfragen einer Wiederherstellung einer Netzwerkverbindung mit dem Ziel-MN verwendet wird, und die Funkverbindungsausfallanzeige zum Anzeigen verwendet wird, dass die Verbindung zwischen der UE und dem Quell-MN unterbrochen ist;
in einem Fall, dass der Quell-MN Ressourceninformationen eines sekundären Quellknotens, SN, freigibt, Empfangen (S204) von UE-Kontextinformationen, die von dem Quell-MN gesendet werden, wobei die UE-Kontextinformationen die Ressourceninformationen des Quell-SN umfassen; und
Herstellen (S206) einer Netzwerkverbindung zwischen der UE und dem Ziel-MN und einem Ziel-SN unter Verwendung von UE-Kontextinformationen.

2. Verfahren nach Anspruch 1, wobei in dem Fall, dass eine von einer UE gesendete Wiederherstellungsanfrage empfangen wird, das Senden einer Funkverbindungsausfallanzeige an einen Quell-MN umfasst:
Bestimmen von Quell-MN-Informationen aus einer physischen Zellidentität (PCI), auf die die UE zugreift; und
Senden der Funkverbindungsausfallanzeige an den Quell-MN gemäß den Informationen des Quell-MN, um den Quell-MN anzuweisen, den mit der UE verbundenen Quell-SN freizugeben.

3. Verfahren nach Anspruch 1, wobei das Wiederherstellen einer Netzwerkverbindung zwischen der UE und dem Ziel-MN und dem Ziel-SN unter Verwendung von UE-Kontextinformationen umfasst:
Bestimmen der Quell-SN als die Ziel-SN gemäß den Kontextinformationen der SN in den UE-Kontextinformationen und der Konfiguration des Ziel-MN, wobei der Quell-SN mit der UE verbunden ist;
Senden einer Anfrage zur Herstellung einer dualen Konnektivität an den Quell-SN; und
Hinzufügen des Quell-SN zu dem Ziel-MN entsprechend dem Träger des Ziel-MN, um eine Netzwerkverbindung zwischen der UE und dem Ziel-MN und dem Quell-SN herzustellen.

4. Verfahren nach Anspruch 3, wobei das Hinzufügen des Quell-SN zu dem Ziel-MN entsprechend dem Träger des Ziel-MN, um eine Netzwerkverbindung zwischen der UE und dem Ziel-MN und dem Quell-SN herzustellen, eines der Folgenden umfasst:
in einem Fall, dass ein Träger des Ziel-MN und ein Träger des Quell-MN auf dem Quell-SN hergestellt sind, Hinzufügen des Quell-SN zu dem Ziel-MN, um eine Netzwerkverbindung zwischen der UE und dem Ziel-MN und dem Quell-SN herzustellen; und
Empfangen einer von dem Quell-SN gesendeten Datenweiterleitungsadresseninformation; Senden der Datenweiterleitungsadressinformation des Quell-SN und einer Datenweiterleitungsadressinformation des Ziel-MN an den Quell-MN, um den Quell-MN und den Quell-SN anzuweisen, Daten jeweils an den Ziel-MN und den Quell-SN gemäß der Datenweiterleitungsadressinformation des Ziel-MN und der Datenweiterleitungsadressinformation des Quell-SN zu senden; Hinzufügen des Quell-SN zu dem Ziel-MN gemäß Daten in dem Quell-MN, um eine Netzwerkverbindung zwischen der UE und dem Ziel-MN und dem Quell-SN herzustellen.

5. Verfahren nach Anspruch 3, wobei nach dem Herstellen der Netzwerkverbindung zwischen der UE und dem Ziel-MN und dem Quell-SN das Verfahren ferner umfasst:
Wiederherstellen einer Signalisierungsfunkträger(SRB)-Verbindung mit dem Ziel-MN, Wiederherstellen der Sicherheit einer dienenden Funkzelle (PCell) und Herstellen einer Datenfunkträger(DRB)-Verbindung zwischen dem Ziel-MN und dem Quell-SN.

6. Verfahren nach Anspruch 1, wobei das Herstellen einer Netzwerkverbindung zwischen der UE und dem Ziel-MN und dem Ziel-SN unter Verwendung von UE-Kontextinformationen umfasst:
in einem Fall, dass gemäß UE-Kontextinformationen gesendete Daten von dem Quell-MN und dem Quell-SN empfangen werden, Wiederherstellen einer Signalisierungsfunkträger(SRB)-Verbindung mit dem Ziel-MN, Wiederherstellen der Sicherheit einer dienenden Funkzelle (PCell), und Herstellen einer Datenfunkträger(DRB)-Verbindung zwischen dem Ziel-MN und dem Quell-SN;
Senden einer Anfrage zur Herstellung einer dualen Konnektivität an einen Ziel-SN;
Empfangen einer Antwortnachricht, die von dem Ziel-SN als Antwort auf die Anfrage zur Herstellung einer dualen Konnektivität gesendet wird, wobei die Antwortnachricht die Datenweiterleitungsadressinformation umfasst; und
basierend auf der Datenweiterleitungsinformation, Senden von Daten des Quell-MN und des Quell-SN an den Ziel-MN und den Ziel-SN, um den Ziel-SN zu dem Ziel-MN hinzuzufügen und eine Netzwerkverbindung zwischen der UE und dem Ziel-MN und dem Ziel-SN herzustellen.

7. Verfahren zur Wiederherstellung einer Netzwerkverbindung, durchgeführt von einem Quell-Master-Knoten, MN, umfassend:
Empfangen (S302) einer Funkverbindungsausfallanzeige, die von einem Ziel-Master-Knoten, MN, gesendet wird, wobei die Funkverbindungsausfallanzeige anzeigt, dass eine Verbindung zwischen einer UE und dem Quell-MN unterbrochen ist; und
in dem Fall, dass Ressourceninformationen eines sekundären Quellknotens, SN, freigegeben werden, Senden (S304) von UE-Kontextinformationen an den Ziel-MN, um den Ziel-MN anzuweisen, eine Netzwerkverbindung zwischen der UE und dem Ziel-MN und einem Ziel-SN unter Verwendung der UE-Kontextinformationen herzustellen, wobei die UE-Kontextinformationen die Ressourceninformationen des Quell-SN umfassen.

8. Verfahren nach Anspruch 1, wobei das Freigeben von Ressourceninformationen eines Quell-SN umfasst:
Empfangen einer Handover-Anfrage-Bestätigungsnachricht, die von dem Ziel-MN gesendet wird, wobei die Handover-Anfrage-Bestätigungsnachricht eine Datenweiterleitungsadresseninformation des Ziel-MN umfasst;
Herstellen eines Datenweiterleitungskanals basierend auf einer Datenweiterleitungsadressinformation des Ziel-MN;
Senden der Daten von dem Quell-MN und dem Quell-SN an den Ziel-MN und den Ziel-SN unter Verwendung des Datenweiterleitungskanals;
Empfangen der von dem Ziel-MN gesendeten Freigabeindikation; und
Senden der Freigabeindikation an den Quell-SN, um den Quell-SN anzuweisen, Ressourceninformationen des Quell-SN freizugeben.

9. Vorrichtung zum Wiederherstellen einer Netzwerkverbindung, umfassend:
ein erstes Sendemodul (802), das konfiguriert ist, um in einem Fall, dass eine von einer Benutzerausrüstung, UE, gesendete Wiederherstellungsanfrage empfangen wird, eine Funkverbindungsausfallanzeige an einen Quell-Master-Knoten, MN, zu senden, wobei die Wiederherstellungsanfrage verwendet wird, um eine Wiederherstellung einer Netzwerkverbindung mit einem Ziel-MN anzufragen, und die Funkverbindungsausfallanzeige verwendet wird, um anzuzeigen, dass die Verbindung zwischen der UE und dem Quell-MN unterbrochen ist;
ein erstes Empfangsmodul (804), das konfiguriert ist, um in einem Fall, dass bestimmt wird, dass der Quell-MN Ressourceninformationen eines sekundären Quellknotens, SN, freigibt, von dem Quell-MN gesendete UE-Kontextinformationen zu empfangen, wobei die UE-Kontextinformationen Ressourceninformationen des Quell-SN umfassen; und
ein erstes Herstellungsmodul (806), das konfiguriert ist, um eine Netzwerkverbindung zwischen der UE und einem Ziel-MN und dem Ziel-SN unter Verwendung von UE-Kontextinformationen herzustellen.

10. Vorrichtung zum Wiederherstellen einer Netzwerkverbindung, umfassend:
ein zweites Empfangsmodul (902), das konfiguriert ist, um eine Funkverbindungsausfallanzeige zu empfangen, die von einem Ziel-MN gesendet wird, wobei die Funkverbindungsausfallanzeige anzeigt, dass eine Verbindung zwischen einer UE und einem Quell-MN unterbrochen ist;
ein zweites Sendemodul (904), das konfiguriert ist, um in einem Fall, dass Ressourceninformationen eines sekundären Quellknotens, SN, freigegeben werden, UE-Kontextinformationen an einen Ziel-MN zu senden, um den Ziel-MN anzuweisen, eine Netzwerkverbindung zwischen der UE und dem Ziel-MN und einem Ziel-SN unter Verwendung der UE-Kontextinformationen herzustellen, wobei die UE-Kontextinformationen die Ressourceninformationen des Quell-SN umfassen.

11. Speichermedium, wobei das Speichermedium ein Computerprogramm speichert, wobei das Computerprogramm konfiguriert ist, um zu laufen, um das Verfahren nach einem der Ansprüche 1 bis 8 auszuführen.

## Revendications

1. Procédé de rétablissement d'une connexion réseau, réalisé par un nœud maître, MN, cible comprenant :
dans un cas où une demande de rétablissement envoyée par un équipement utilisateur, UE, est reçue, l'envoi (S202) d'une indication de défaillance de liaison radio à un MN source, dans lequel la demande de rétablissement est utilisée pour demander le rétablissement d'une connexion réseau avec le MN cible, et l'indication de défaillance de liaison radio est utilisée pour indiquer que la connexion entre l'UE et le MN source est interrompue ;
dans un cas où le MN source libère des informations de ressources d'un nœud secondaire, SN, source, la réception (S204) d'informations de contexte d'UE envoyées par le MN source, dans lequel les informations de contexte d'UE comprennent les informations de ressources du SN source ; et
l'établissement (S206) d'une connexion réseau entre l'UE et le MN cible et un SN cible en utilisant des informations de contexte d'UE.

2. Procédé selon la revendication 1, dans lequel, dans le cas où une demande de rétablissement envoyée par un UE est reçue, l'envoi d'une indication de défaillance de liaison radio à un MN source comprend :
la détermination d'informations de MN source à partir d'une identité de cellule physique (PCI) à laquelle l'UE accède ; et
l'envoi de l'indication de défaillance de liaison radio au MN source selon les informations du MN source, de manière à donner instruction au MN source de libérer le SN source connecté à l'UE.

3. Procédé selon la revendication 1, dans lequel le rétablissement d'une connexion réseau entre l'UE et le MN cible et le SN cible à l'aide d'informations de contexte d'UE comprend :
la détermination du SN source en tant que SN cible selon les informations de contexte du SN dans les informations de contexte d'UE et la configuration du MN cible, dans lequel le SN source est connecté à l'UE ;
l'envoi d'une demande d'établissement de double connectivité au SN source ; et
l'ajout du SN source au MN cible selon la porteuse du MN cible, de manière à établir une connexion réseau entre l'UE et le MN cible et le SN source.

4. Procédé selon la revendication 3, dans lequel l'ajout du SN source au MN cible selon la porteuse du MN cible, de manière à établir une connexion réseau entre l'UE et le MN cible et le SN source comprend l'un des éléments suivants :
dans un cas où une porteuse du MN cible et une porteuse du MN source sont établies sur le SN source, l'ajout du SN source au MN cible, de manière à établir une connexion réseau entre l'UE et le MN cible et le SN source ; et
la réception d'informations d'adresse d'acheminement de données envoyée par le SN source ; l'envoi des informations d'adresse d'acheminement de données du SN source et d'informations d'adresse d'acheminement de données du MN cible au MN source, de manière à donner instruction au MN source et au SN source respectivement d'envoyer des données au MN cible et au SN source selon les informations d'adresse d'acheminement de données du MN cible et les informations d'adresse d'acheminement de données du SN source ; l'ajout du SN source au MN cible selon des données dans le MN source, de manière à établir une connexion réseau entre l'UE et le MN cible et le SN source.

5. Procédé selon la revendication 3, dans lequel, après l'établissement de la connexion réseau entre l'UE et le MN cible et le SN source, le procédé comprend en outre :
le rétablissement d'une connexion de porteuse radio de signalisation (SRB) avec le MN cible, la restauration de la sécurité d'une cellule de desserte (PCell), et l'établissement d'une connexion de porteuse radio de données (DRB) entre le MN cible et le SN source.

6. Procédé selon la revendication 1, dans lequel l'établissement d'une connexion réseau entre l'UE et le MN cible et le SN cible à l'aide d'informations de contexte d'UE comprend :
dans un cas où des données envoyées par le MN source et le SN source sont reçues selon des informations de contexte d'UE, le rétablissement d'une connexion de porteuse radio de signalisation (SRB) avec le MN cible, la restauration de la sécurité d'une cellule de desserte (PCell), et l'établissement d'une connexion de porteuse radio de données (DRB) entre le MN cible et le SN source ;
l'envoi d'une demande d'établissement de double connectivité à un SN cible ;
la réception d'un message de réponse envoyé par le SN cible en réponse à la demande d'établissement de double connectivité, dans lequel le message de réponse comprend les informations d'adresse d'acheminement de données ; et
sur la base des informations d'acheminement de données, l'envoi de données du MN source et du SN source au MN cible et au SN cible, de manière à ajouter le SN cible au MN cible, et à établir une connexion réseau entre l'UE et le MN cible et le SN cible.

7. Procédé de rétablissement d'une connexion réseau, réalisé par un nœud maître, MN, source comprenant :
la réception (S302) d'une indication de défaillance de liaison radio envoyée par un nœud maître cible, MN, dans lequel l'indication de défaillance de liaison radio indique qu'une connexion entre un UE et le MN source est interrompue ; et
dans le cas où des informations de ressources d'un nœud secondaire, SN, source sont libérées, l'envoi (S304) d'informations de contexte d'UE au MN cible, de manière à donner instruction au MN cible d'établir une connexion réseau entre l'UE et le MN cible et un SN cible en utilisant les informations de contexte d'UE, dans lequel les informations de contexte d'UE comprennent les informations de ressources du SN source.

8. Procédé selon la revendication 1, dans lequel la libération d'informations de ressources d'un SN source comprend :
la réception d'un message d'accusé de réception de demande de transfert envoyé par le MN cible, dans lequel le message d'accusé de réception de demande de transfert comprend des informations d'adresse d'acheminement de données du MN cible ;
l'établissement d'un canal d'acheminement de données sur la base des informations d'adresse d'acheminement de données du MN cible ;
l'envoi des données du MN source et du SN source au MN cible et au SN cible en utilisant le canal d'acheminement de données ;
la réception de l'indication de libération envoyée par le MN cible ; et
l'envoi de l'indication de libération au SN source pour donner instruction au SN source de libérer des informations de ressources du SN source.

9. Dispositif de rétablissement d'une connexion réseau, comprenant :
un premier module d'envoi (802), configuré pour, dans un cas où une demande de rétablissement envoyée par un équipement utilisateur, UE, est reçue, envoyer une indication de défaillance de liaison radio à un nœud maître source, MN, dans lequel la demande de rétablissement est utilisée pour demander le rétablissement d'une connexion réseau avec un MN cible, et l'indication de défaillance de liaison radio est utilisée pour indiquer que la connexion entre l'UE et le MN source est interrompue ;
un premier module de réception (804), configuré pour, dans un cas où il est déterminé que le MN source libère des informations de ressources d'un nœud secondaire, SN, source, recevoir des informations de contexte d'UE envoyées par le MN source, dans lequel les informations de contexte d'UE comprennent des informations de ressources du SN source ; et
un premier module d'établissement (806), configuré pour établir une connexion réseau entre l'UE et un MN cible et le SN cible en utilisant des informations de contexte d'UE.

10. Dispositif de rétablissement d'une connexion réseau, comprenant :
un second module de réception (902), configuré pour recevoir une indication de défaillance de liaison radio envoyée par un MN cible, dans lequel l'indication de défaillance de liaison radio indique qu'une connexion entre un UE et un MN source est interrompue ;
un second module d'envoi (904), configuré pour, dans un cas où des informations de ressources d'un nœud secondaire, SN, source sont libérées, envoyer des informations de contexte d'UE à un MN cible, de manière à donner instruction au MN cible d'établir une connexion réseau entre l'UE et le MN cible et un SN cible en utilisant les informations de contexte d'UE, dans lequel les informations de contexte d'UE comprennent les informations de ressources du SN source.

11. Support de stockage, dans lequel le support de stockage stocke un programme informatique, dans lequel le programme informatique est configuré pour fonctionner pour exécuter le procédé selon l'une quelconque des revendications 1 à 8.
